# EUROPÄISCHE PATENTSCHRIFT

(11) **EP 0 856 452 B1**
(45) Veröffentlichungstag und Bekanntmachung des Hinweises auf die Patenterteilung: **06.08.2003**
(21) Anmeldenummer: 97121497.8
(22) Anmeldetag: 06.12.1997
(51) Int. Cl.: B62D 1/19, F16F 7/12, B62D 1/11

(54) **Sicherheitslenksäule**
Safety steering column
Colonne de direction de sécurité

(30) Priorität: 04.02.1997 DE 19704013
(43) Veröffentlichungstag der Anmeldung: 05.08.1998
(73) Patentinhaber: Nacam Deutschland GmbH, 49448 Lemförde (DE)
(72) Erfinder: Grams, Kay-Uwe, 49692 Cappeln (DE); Vortmeyer, Jens, 32361 Preussisch-Oldendorf (DE); Schäfer, Burkhard, 27777 Ganderkesee (DE)

(56) Entgegenhaltungen:
- DE-A- 4 404 569
- US-A- 3 916 720

## Beschreibung

Die Erfindung betrifft eine Sicherheitslenksäule aus einem Lenksäulengehäuse mit einem sich in den Fahrgastraum erstreckenden Mantelrohr und einer darin drehbar gelagerten Lenkwelle zur Aufnahme eines Lenkrades, die im Fall eines Frontalunfalls verkürzbar ist.

Solche energieabsorbierenden Sicherheitslenksäulen kommen zur Anwendung, um den Aufprall eines Fahrers bei einem Frontalcrash / Offsetcrash zusätzlich zur Abstützung durch einen Airbag abzudämpfen. Es sind Sicherheitssysteme bekannt, bei denen vorgeformte Wellrohre in der Lenksäule während des Crashvorganges zieharmonikaartig verformt werden und somit die Bewegungsenergie absorbieren.

Bei der Abstützung des Fahrers werden dabei sowohl axiale als auch radiale Kräfte in die Lenksäule eingeleitet. Nachteilig an den bekannten Wellrohren ist, daß diese sehr biegeweich sind und dementsprechend eine geringe Querstabilität aufweisen. Dadurch treten unerwünschte Schwingungen auf. Bei einer Verformung können nicht vorbestimmbare Deformationen entstehen, die sich nachteilig auf die Sicherheit eines Fahrzeugführers auswirken.

Die gattungsbildende US-A-3 916 720 offenbart eine zusammendrückbare Lenksäule mit einer Lenkwelle, einem diese umgebenden Schieberohr und einem dieses umgebenden Mantelrohr, das an einer Spritzwand eines Kraftfahrzeugs gelagert ist. Ein konusartiges Drückteil sitzt auf dem Schieberohr und greift mit seinem Ende geringsten Durchmessers in das Mantelrohr ein.

Aus der DE 44 04 569 Al ist ein nach dem Stülpprinzip arbeitendes Deformationselement bekannt, welches zwischen Stoßstangen und Rahmen eines Kraftfahrzeugs eingesetzt werden kann. Das Deformationselement besteht aus einem Deformationsrohr und einem konusartigen Stülpwerkzeug, das mit seinem Ende geringsten Durchmessers einer stirnseitigen Öffnung des Deformationsrohrs zugewandt ist. In dem diese Öffnung umgebenden Randbereich des Deformationsrohrs sind Kerben eingebracht.

Der Erfindung liegt das technische Problem zugrunde, eine kompaktere und einfachere Bauweise für die Sicherheitslenksäule zu schaffen.

Die Lösung dieses technischen Problems wird in Verbindung mit den Oberbegriffsmerkmalen erfindungsgemäß durch die im kennzeichnenden Teil des Patentanspruchs 1 angegebene technische Lehre vermittelt.

Dabei sind in das sich in den Fahrgastraum erstreckenden Ende des Mantelrohres Materialschwächungen eingebracht, die über den Umfang des Mantelrohres verteilt sind. Benachbart dem Ende des Mantelrohres ist ein konusartiges Bauteil koaxial angeordnet, dessen kleinster Außendurchmesser dem des Innendurchmessers des Endes des Mantelrohres entspricht, wobei dieser kleinste Außendurchmesser dem Ende des Mantelrohres zugewandt ist. Das konusartige Bauteil ist auch als Lagersitz für die Lagerung der Lenkwelle ausgebildet.

Von besonderem Vorteil bei dieser erfinderischen Sicherheitslenksäule ist, daß eine sehr hohe Quersteifigkeit des Rohres erzielt, beziehungsweise aufrechterhalten werden kann. Die während des Crashs auftretenden elastischen Biegekräfte können sich bei dieser Konstruktion nicht auf die Lenksäule auswirken, da eine Verkürzung der Sicherheitslenksäule dazu führt, daß das konusartige Bauteil in das Mantelrohr eindringt. Das Mantelende reißt dabei in mehrere streifenförmige axiale Abschnitte auf. Diese axialen Abschnitte verformen sich während des Aufreißens plastisch. Durch die auftretenden Reibungs- und Verformungskräfte wird die Aufprallenergie absorbiert. Nach einem Aufprall wird eine axiale Bewegung des Lenkrades in einer zur Fahrtrichtung entgegengesetzten Richtung durch die zwischen Mantelrohr und konusartigem Bauteil vorhandene Reibung wirksam verhindert.

Bei einer besonders vorteilhaften Ausführungsform der Erfindung sind die Materialschwächungen als in den Randbereich des Mantelrohres eingebrachte Einkerbungen ausgeführt. Diese Einkerbungen können in regelmäßigen oder unregelmäßigen Abständen über den Umfang des Endes des Mantelrohres verteilt sein. Über eine Variation der Wanddicke des Mantelrohres und der Anzahl und Anordnung der Einkerbungen läßt sich das Verhalten der Sicherheitslenksäule in einem weiten Bereich an die zu erwarten Beanspruchungen anpassen.

Gemäß einer bevorzugten Ausführungsform der Erfindung erweitert sich die Oberfläche des konusartigen Bauteils entlang einer konkav verlaufenden Konturlinie von einem kleinen Außendurchmesser mit koaxialer Oberfläche bis zu einem großen Außendurchmesser mit einer sich radial erstreckenden Oberfläche. Bei einem Frontalunfall und einem Zusammenschieben der Sicherheitslenksäule entstehen an den Einkerbungen axiale Risse, wobei sich die entstehenden streifenförmigen Segmente des Mantelrohres auftulpen beziehungsweise sich lockenförmig ineinander drehen.

Das konusartige Bauteil ist kraftschlüssig und/oder formschlüssig mit dem Ende des Mantelrohres verbunden.

Bei einer anderen zu bevorzugenden Ausführungsform kann das konusartige Bauteil als Außenschale der Lagerung der Lenksäule ausgeführt sein. Dies führt zu einer wesentlichen Verringerung der Anzahl der benötigen Bauteile.

Bei einer weiteren Ausführungsform des Gegenstandes der Erfindung ist das konusartige Bauteil als rückseitiges Bauteil des Lenkrades ausgeführt, so daß es im Normalbetrieb des Kraftfahrzeuges gegenüber dem Mantelrohr verdrehbar ist und nur im Falle eines Frontalzusammenstoßes mit dem Mantelrohr in Kontakt tritt.

Weitere vorteilhafte Ausgestaltungen der Erfindung ergeben sich aus den Unteransprüchen. Nachfolgend ist ein Ausführungsbeispiel der Erfindung anhand von Zeichnungen näher beschrieben. Es zeigen:

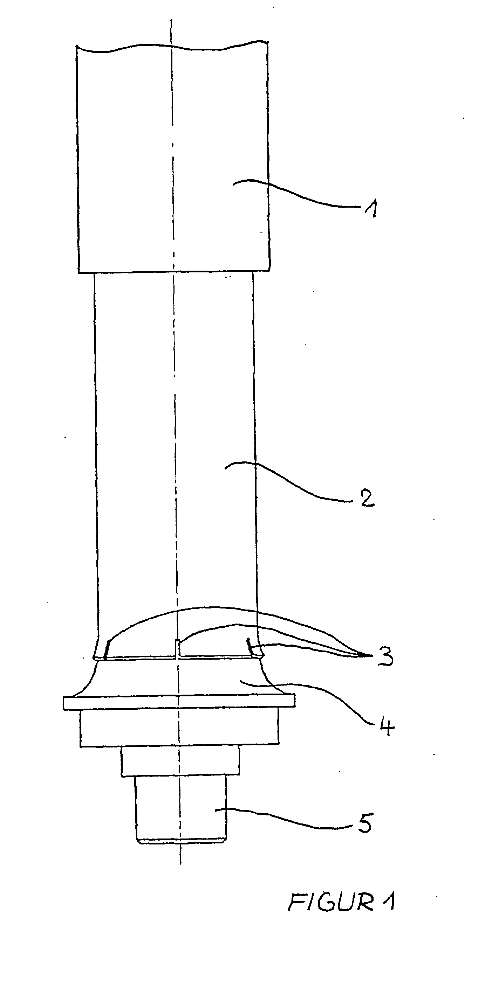

- Figur 1: eine Teilansicht der Sicherheitslenksäule,

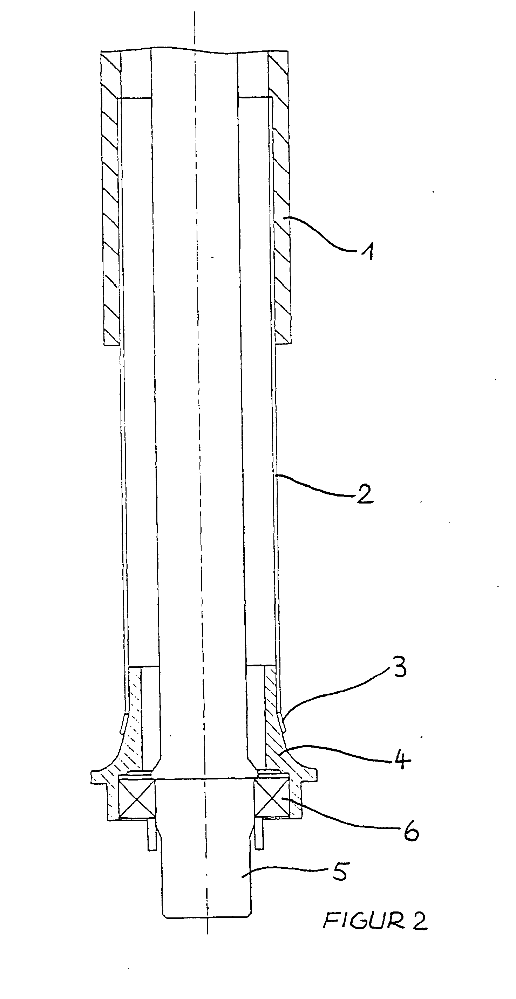

- Figur 2: eine Schnittdarstellung der Figur 1 und
- Figur 3: eine Schnittdarstellung der Sicherheitslenksäule nach einem Frontalunfall.

Die Sicherheitslenksäule besteht aus einem Lenksäulengehäuse 1 mit einem sich in den Fahrgastraum erstreckenden Mantelrohr 2 und einer darin drehbar gelagerten Lenkwelle 5, an der das Lenkrad befestigt wird. In das lenkradseitige Ende des Mantelrohres 2 ist ein konisches Bauteil 4 mit seiner Seite des geringsten Außendurchmessers eingesetzt, wobei sich der Außendurchmesser nach außen hin erweitert, bis er im Endbereich annähernd radial verläuft. In das konische Bauteil 4 ist die Lagerung 6 der Lenkwelle 5 eingesetzt.

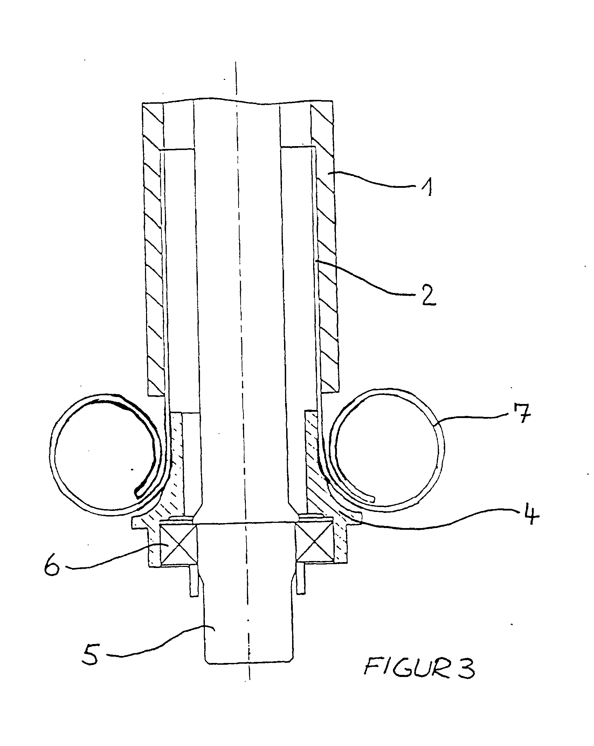

Das Mantelrohr 2 ist ein Stück auf das konische Bauteil 4 aufgeschoben und besitzt in regelmäßigen Abständen auf seinem Umfang verteilt axiale Einkerbungen, an denen das Mantelrohr während eines Frontalunfalles beim Ineinanderschieben von konischem Bauteil 4 und Mantelrohr 2 in definierter Weise aufreißt. Die dabei entstehenden streifenförmigen Segmente des Mantelrohres 2 werden durch die konische Fläche des konischen Bauteils 4 radial nach außen abgebogen, wobei sie sich, wie in der Figur 3 dargestellt, lockenartig aufdrehen oder auftulpen.

Dies hat als positiven Nebeneffekt zur Folge, daß die derartig verformten Segmente 7 des Mantelrohres (2) sich zwar radial um die Lenksäule nach außen erstrecken, daß aber keine scharfen Blechteile über die Kontur der Lenkradnabe in den Fahrgastraum hervortreten.

Die Festigkeit des Mantelrohres 2 ist so ausgelegt, daß sich die Lenksäule bei einem Frontalcrash und Zündung des Airbags zunächst nicht verformt, sich jedoch beim Aufprall des Fahrers auf den Airbag zusammenschiebt. Dabei erfolgt keine Intrusion des Mantelrohres 2 in das Lenksäulengehäuse und somit auch keine Kollision mit anderen Bauteilen.

### Bezugszeichenliste

- 1: Lenksäulengehäuse
- 2: Mantelrohr
- 3: Einkerbungen
- 4: konisches Bauteil
- 5: Lenkwelle
- 6: Lagerung
- 7: verformtes Segment

## Patentansprüche

1. Sicherheitslenksäule bestehend aus einem Lenksäulengehäuse, einem sich in den Fahrgastraum erstreckenden Mantelrohr und einer darin drehbar gelagerten und im Fall eines Unfalles verkürzbaren Lenkwelle zur Aufnahme eines Lenkrades, wobei
in dem sich in den Fahrgastraum erstreckenden Ende des Mantelrohres (2) über den Umfang verteilte Materialschwächungen eingebracht sind,
zu dem Ende des Mantelrohres (2) benachbart ein konusartiges Bauteil (4) koaxial angeordnet ist, dessen kleinster Außendurchmesser kleiner oder gleich dem Innendurchmesser des Mantelrohres (2) ist und wobei das konusartige Bauteil (4) mit seinem kleinsten Außendurchmesser dem Mantelrohr (2) zugewandt ist, **dadurch gekennzeichnet, daß** das konusartige Bauteil (4) als Lagersitz für die Lagerung (6) der Lenkwelle (5) ausgebildet ist.

2. Sicherheitslenksäule nach Anspruch 1,
**dadurch gekennzeichnet, daß**
die Materialschwächungen als in den Randbereich des Mantelrohres (2) eingebrachte Einkerbungen (3) ausgeführt sind.

3. Sicherheitslenksäule nach einem oder mehreren der vorgenannten Ansprüche,
**dadurch gekennzeichnet, daß**
die nach außen gerichtete Oberfläche des konusartigen Bauteils (4) sich entlang einer konkav verlaufenden Querschnittslinie kontinuierlich vom kleinsten Außendurchmesser mit koaxialer Oberfläche zu einem großen Außendurchmesser mit einer sich annähernd radial erstreckenden Oberfläche erweitert.

4. Sicherheitslenksäule nach einem oder mehreren der vorgenannten Ansprüche,
**dadurch gekennzeichnet, daß**
das konusartige Bauteil (4) im Ende des Mantelrohres (2) ortsfest angeordnet ist.

5. Sicherheitslenksäule nach einem oder mehreren der Ansprüche 1 - 3,
**dadurch gekennzeichnet, daß**
das konusartige Bauteil (4) als Außenschale der Lagerung (6) der Lenkwelle (5) ausgebildet ist.

6. Sicherheitslenksäule nach einem oder mehreren der Ansprüche 1 - 3, **dadurch**
**gekennzeichnet, daß**
das konusartige Bauteil (4) als rückseitiges Bauteil des Lenkrades ausgeführt ist.

7. Sicherheitslenksäule nach einem oder mehreren der Ansprüche 1 - 3,
**dadurch gekennzeichnet, daß**
das konusartige Bauteil (4) ein Bestandteil der Lagerung (6) der Lenksäule ist.

8. Sicherheitslenksäule nach einem oder mehreren der vorgenannten Ansprüche,
**dadurch gekennzeichnet, daß**
das Mantelrohr (2) einer definierten radialen und / oder axialen Mindestbelastung ohne Verformung standhält.

## Claims

1. Safety steering column consisting of a steering column housing, a steering column tube, which extends into the passenger compartment, and a steering shaft, which is rotatably mounted in the steering column tube and can be shortened in the case of an accident, for holding a steering wheel,
wherein
material weakenings are made in the end of the steering column tube (2) which extends into the passenger compartment, these being distributed over the circumference,
a conical structural part (4) is disposed coaxially adjacent to the end of the steering column tube (2), the minimum outside diameter of which structural part is smaller than or equal to the inside diameter of the steering column tube (2), and wherein the conical structural part (4) faces the steering column tube (2) with its minimum outside diameter, **characterised in that** the conical structural part (4) is formed as a bearing seat for the mounting (6) of the steering shaft (5).

2. Safety steering column according to Claim 1,
**characterised in that**
the material weakenings are in the form of notches (3) made in the edge region of the steering column tube (2).

3. Safety steering column according to one or more of the preceding Claims,
**characterised in that**
the outward directed surface of the conical structural part (4) widens continuously along a cross-sectional line extending in a concave fashion from the minimum outside diameter with a coaxial surface to a large outside diameter with an approximately radially extending surface.

4. Safety steering column according to one or more of the preceding Claims,
**characterised in that**
the conical structural part (4) is disposed in a stationary fashion in the end of the steering column tube (2).

5. Safety steering column according to one or more of Claims 1 - 3,
**characterised in that**
the conical structural part (4) is formed as an outer shell of the mounting (6) of the steering shaft (5).

6. Safety steering column according to one or more of Claims 1 - 3,
**characterised in that**
the conical structural part (4) is constructed as a rear structural part of the steering wheel.

7. Safety steering column according to one or more of Claims 1 - 3,
**characterised in that**
the conical structural part (4) is a component of the mounting (6) of the steering column.

8. Safety steering column according to one or more of the preceding Claims,
**characterised in that**
the steering column tube (2) withstands a defined radial and/or axial minimal load without deformation.

## Revendications

1. Colonne de direction de sécurité comprenant un boîtier de colonne de direction, un manchon s'étendant dans l'habitacle et un arbre de direction monté à rotation dans celui-ci et pouvant être raccourci en cas d'accident pour recevoir un volant, des matériaux d'amortissement répartis à la périphérie étant introduits à l'extrémité du manchon (2) s'étendant dans l'habitacle, et au voisinage de l'extrémité du manchon (21) étant disposé coaxialement un élément conique (4) dont le plus petit diamètre externe est plus petit ou égal au diamètre interne du manchon (2), et l'élément conique (4) étant tournant par son plus petit diamètre externe dans le manchon (2), **caractérisé en ce que,** l'élément conique (4) est conformé en tant que siège pour le palier (6) de l'arbre de direction (5).

2. Colonne de direction de sécurité selon la revendication 1, **caractérisé en ce que,**
les matériaux d'amortissement sont réalisés comme des entailles (3) introduites dans le bord du manchon (2).

3. Colonne de direction de sécurité selon l'une ou plusieurs des revendications précédentes, **caractérisé en ce que,**
la surface de l'élément conique (4) orientée vers l'extérieur s'élargit le long de la ligne de coupe concave continuellement depuis le plus petit diamètre extérieur à la surface coaxiale vers le grand diamètre externe avec une surface s'étendant approximativement radiale.

4. Colonne de direction de sécurité selon l'une ou plusieurs des revendications précédentes, **caractérisé en ce que,**
l'élément conique (4) est fixé à l'extrémité du manchon (2).

5. Colonne de direction de sécurité selon l'une ou plusieurs des revendications 1 - 3, **caractérisé en ce que,**
l'élément conique (4) est conformé en tant que coquille externe du palier (6) de l'arbre de direction (5).

6. Colonne de direction de sécurité selon l'une ou plusieurs des revendications 1 - 3, **caractérisé en ce que,**
l'élément conique (4) est réalisé en tant qu'élément à l'arrière du volant.

7. Colonne de direction de sécurité selon l'une ou plusieurs des revendications 1 - 3, **caractérisé en ce que,**
l'élément conique (4) est un élément du palier (6) de la colonne de direction.

8. Colonne de direction de sécurité selon l'une ou plusieurs des revendications, **caractérisé en ce que,**
le manchon (2) résiste à un effort minimum radial et/ou axial sans déformation.
